Europäisches Patentamt

European Patent Office

Office européen des brevets

(11) Publication number: **0 095 631**
A1

## (12) EUROPEAN PATENT APPLICATION

(21) Application number: **83104760.0**

(22) Date of filing: **14.05.83**

(51) Int. Cl.³: **B 29 H 5/00**, B 29 H 9/08

(30) Priority: **26.05.82 IT 2149682**

(43) Date of publication of application: **07.12.83**
**Bulletin 83/49**

(84) Designated Contracting States: **AT BE CH DE FR GB LI LU NL SE**

(71) Applicant: **I.T.S. S.r.l., Via Borromei, 5, I-20100 Milan (IT)**

(72) Inventor: **Deregibus, Alflo, Via Livorno, 12/B, I-Padova (IT)**

(74) Representative: **Gervasi, Gemma et al, Studio Brevetti e Marchi NOTARBARTOLO & GERVASI 33, Viale Bianca Marla, I-20122 Milano (IT)**

(54) Electrothermal vulcanisation over for rubber articles.

(57) Electrothermal vulcanisation ovens are described for natural or synthetic rubber articles formed on metal cores and/or comprising incorporated metal parts, through which an electric current can be circulated to produce heat sufficient for vulcanisation.

The described ovens essentially comprise an insulated chamber (7, 8, 9) tightly closed laterally and open at its front and rear by a space sufficient to allow the bare metal parts to emerge.

These are fixed in suitable openable clamps (1) which are connected in an appropriate manner to an electric current supply apparatus.

- 1 -

ELECTROTHERMAL VULCANISATION OVEN FOR RUBBER ARTICLES

This invention relates to an electrothermal vulcanisation oven for rubber articles.

Electrothermal vulcanisation signifies the vulcanisation of rubber articles which are formed on metal support cores and/or which contain incorporated metal parts, in which the heat necessary for vulcanising the mixtures is produced by the Joule effect by passing a current of suitable intensity through said metal parts for a determined time.

The oven according to the present invention can be used for vulcanising pieces of any shape and size provided they comprise emerging metal parts which either constitute the withdrawable core of the articles or are incorporated therein as reinforcing elements.

Articles falling in the aforesaid class comprise for example electric cables, conveyor belts, tubes and cylinders produced by extrusion or winding on a metal core and/or possibly containing metal reinforcing wires in their structure, such as tyres, road supports and the like.

Reference will be made hereinafter to an oven for vulcanising rubber tubes formed on steel cores, but it is apparent that by suitably adapting the parts relative to the electrical contacts the oven can be used for vulcanising any article.

The new oven is constituted essentially by an insulated chamber which is tightly closed laterally and is provided at its front and rear ends with apertures sufficient to enable the metal supports or the parts inserted into the articles to emerge.

The front and rear ends are also fitted with openable gripping clamps arranged to fix on to said metal parts and to connect them to a current supply unit, preferably by means of flexible connections.

In a preferred embodiment, the new oven is of rectangular plan and of substantially rectangular cross-section, and is insulated on all its perimetral surfaces with rock wool or equivalent insulation for a thickness for example of 100 mm.

It comprises the following essential parts:

1. a base floor which is fixed to a bed supporting it at a certain height from the ground, and on which the tubes or like articles can rest, the base floor having a neutral central zone about 100 mm wide, structured in such a manner as to allow passage of one or more disappearing columns;

2. a second floor also for supporting the tubes, fitted with two insulated side walls which during operation tightly close the base floor to form a lower heating chamber;

3. an insulated roof fitted with insulated side walls, which during operation tightly close the second floor to form an upper heating chamber;

4. one or more retractable columns of vertical axis disposed in the central zone of the oven, and operable in such a manner that they travel through a first upward stroke which raises the roof in order to open the upper chamber, and a second upward stroke which also raises the two floors to simultaneously open the lower chamber.  The columns can also carry out the reverse movements to retract into the bed and successively close the upper and lower chambers;

5. a set of hydraulic, mechanical or pneumatic control and synchronisation members for the movement of the columns;

6. a set of metal clamps disposed at the front end of the oven and a set of metal clamps disposed at the rear end of the oven, to allow gripping of the metal parts emerging from ·the pieces to be vulcanised, and to connect them to the current supply apparatus;

7. hydraulic, mechanical or pneumatic control and synchronisation members which allow the clamps to be opened and closed.

One particularly advantageous embodiment of the oven is described in detail hereinafter and is diagrammatically represented on the accompanying drawings, in which:

Figure 1 is a front view of the lower (or upper) half oven taken from the feed end;  the clamps for gripping the metal cores of the tubes to be vulcanised are visible, these metal cores emerging from the lower (or upper) heating and vulcanising chamber;

Figure 2 is a plan view from above of the clamps of Figure 1 disposed at the rear feed end of the oven;

Figure 3 is a view of the lower (or upper) half oven taken from the rear, showing the gripping clamps for the metal cores emerging from the rubber tubes to be vulcanised;  the number of these clamps is always n-1, where n is the number of clamps disposed at the front end;

Figure 4 is a side view of the same rear half of the lower (or upper) chamber of the oven of Figure 3, in which the gripping clamps closed on the metal cores emerging from the oven are again visible;

Figure 5 is a central vertical section through the oven, with the lower heating chamber closed and the upper chamber open at the level of the loading and unloading tables;

Figure 6 is a central vertical section through the oven, with the lower heating chamber open and the upper heating chamber closed, the entire oven being raised so that the lower chamber is brought to the level of the loading and unloading tables;

Figure 7 shows the process diagram of the oven.

In the figures, equal parts are indicated by equal reference numerals, namely:

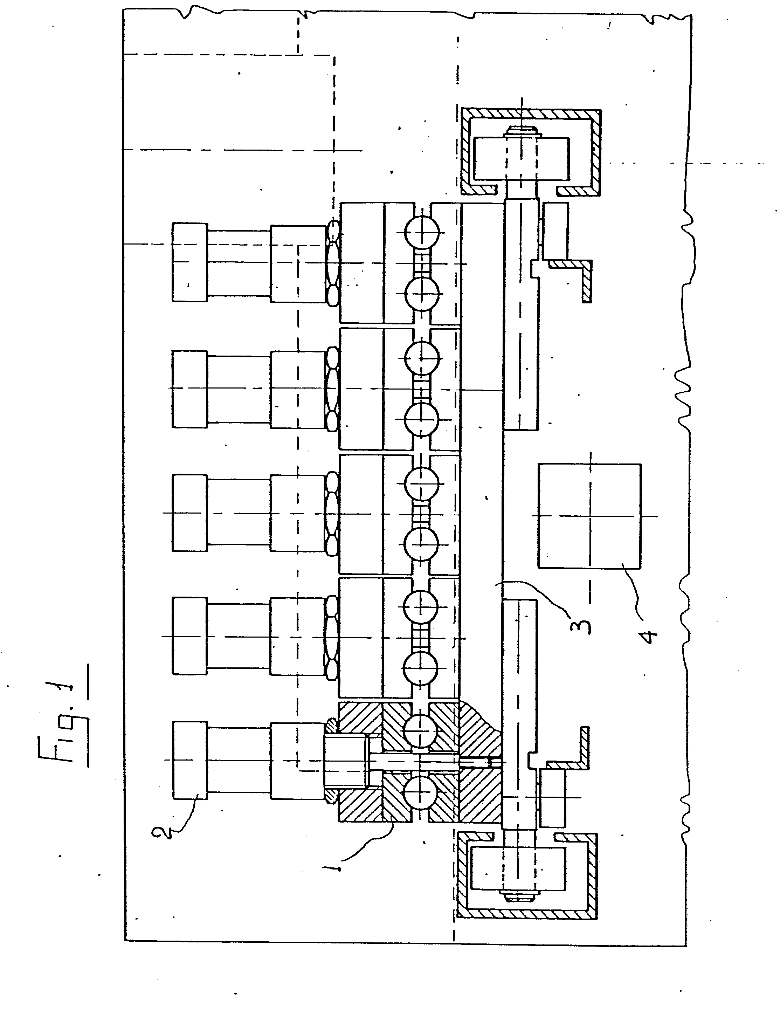

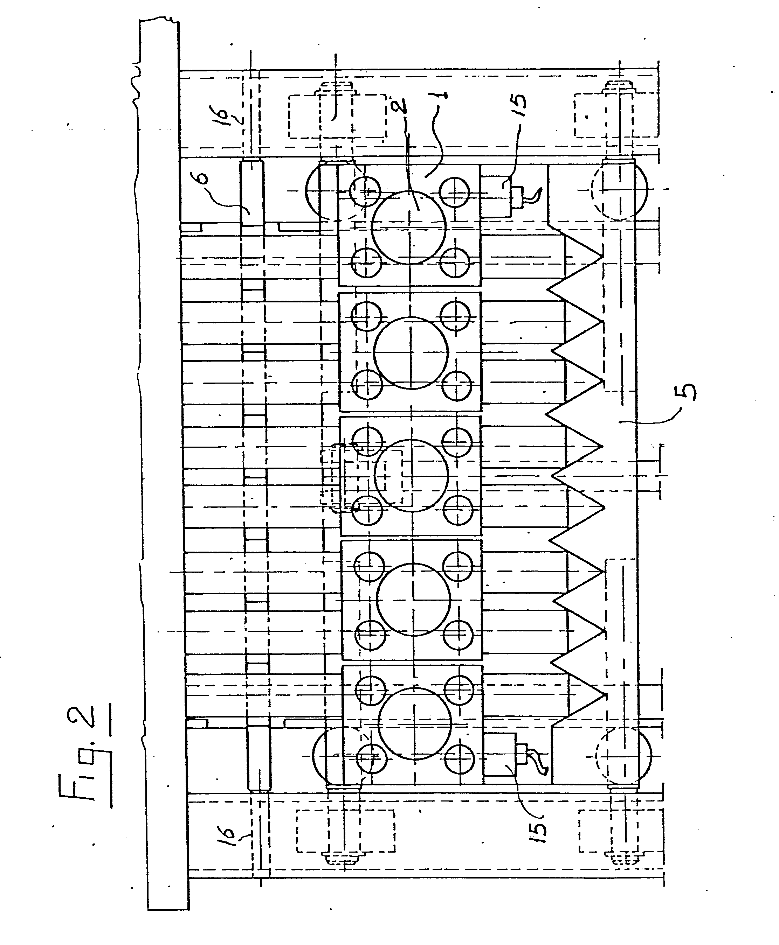

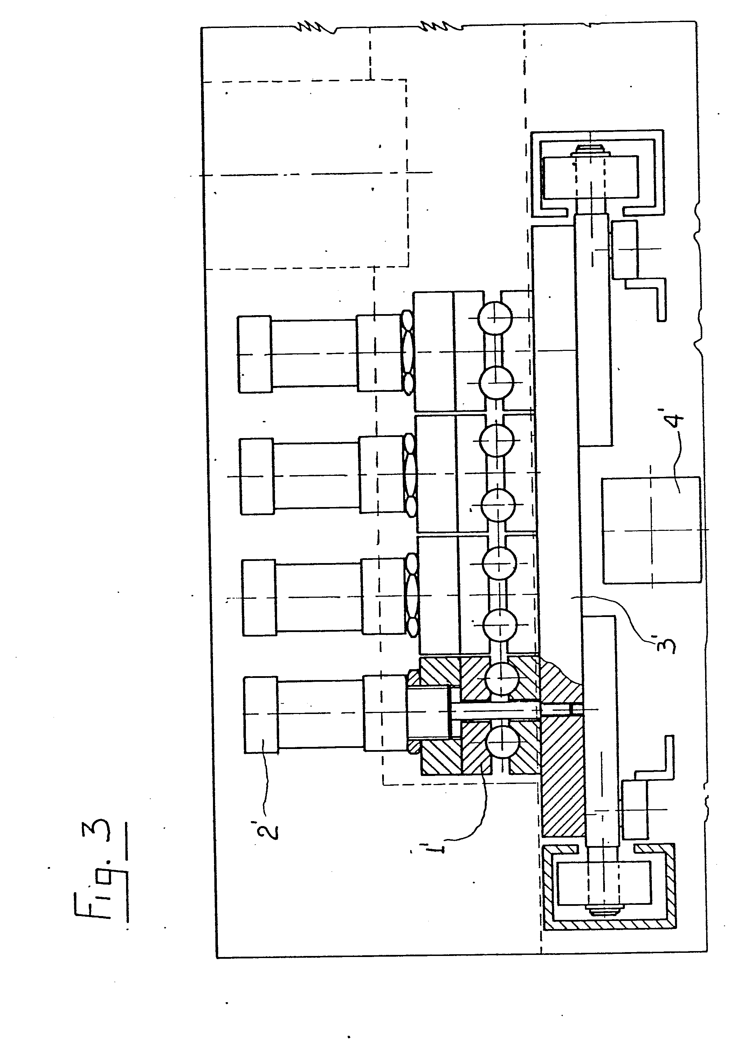

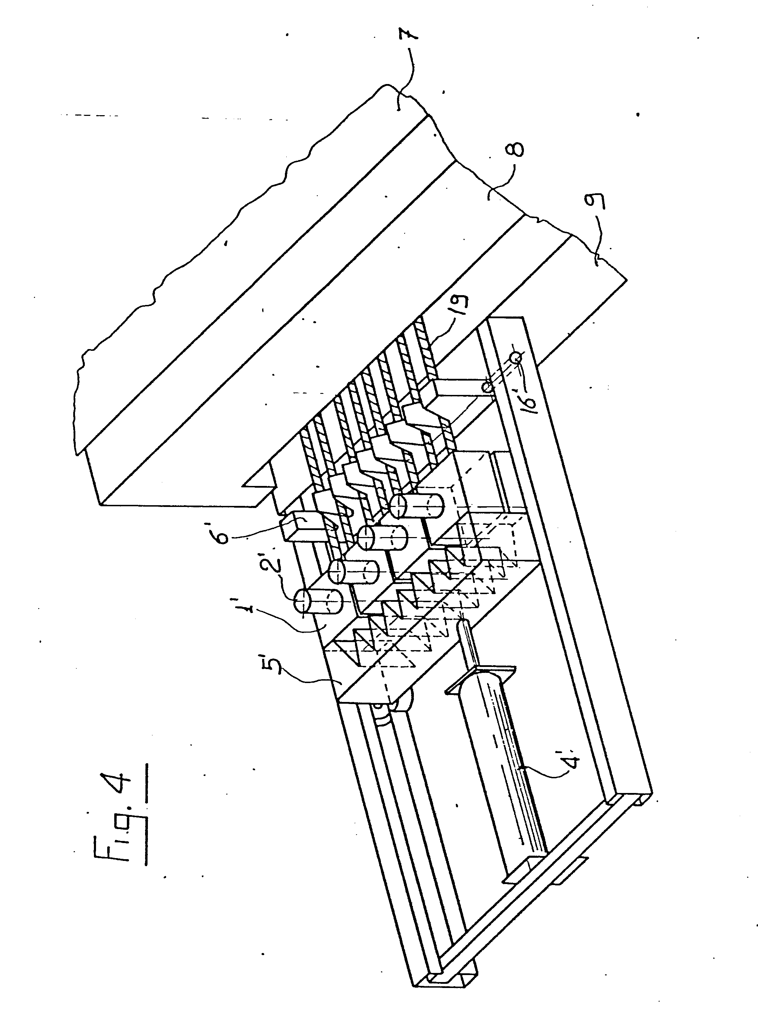

In Figures 1, 2, 3 and 4, the reference numeral 1 indicates the openable clamps which enable the metal cores at the front oven feed end to be gripped, and 1' indicates the equivalent clamps disposed at the rear end of the oven; 2 indicates the pistons which pneumatically control the opening and closure of the front clamps, and 2' indicates the equivalent pistons for opening and closing the rear clamps; 3 and 3' indicate the two carriages which support the clamps; 4 and 4' indicate the two pistons which control the movement of the two combs 5 and 5' which fix and space-apart the ends of the metal cores of the tubes to be vulcanised; 6 and 6' indicate two combs disposed respectively at the front end and rear end of the oven to receive the metal cores, these combs being hinged on pivots 16 and 16' which enable them to be rotated manually or mechanically from the vertical to the horizontal position; and 15 indicates the pins connected to the current supply apparatus.

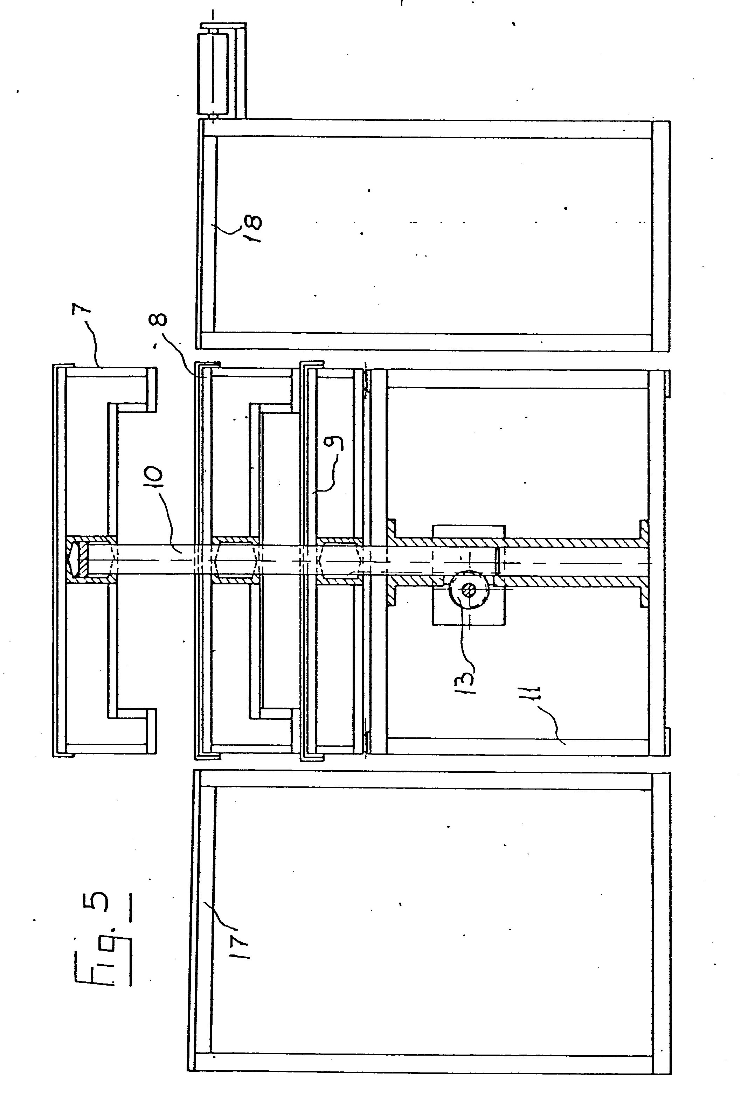

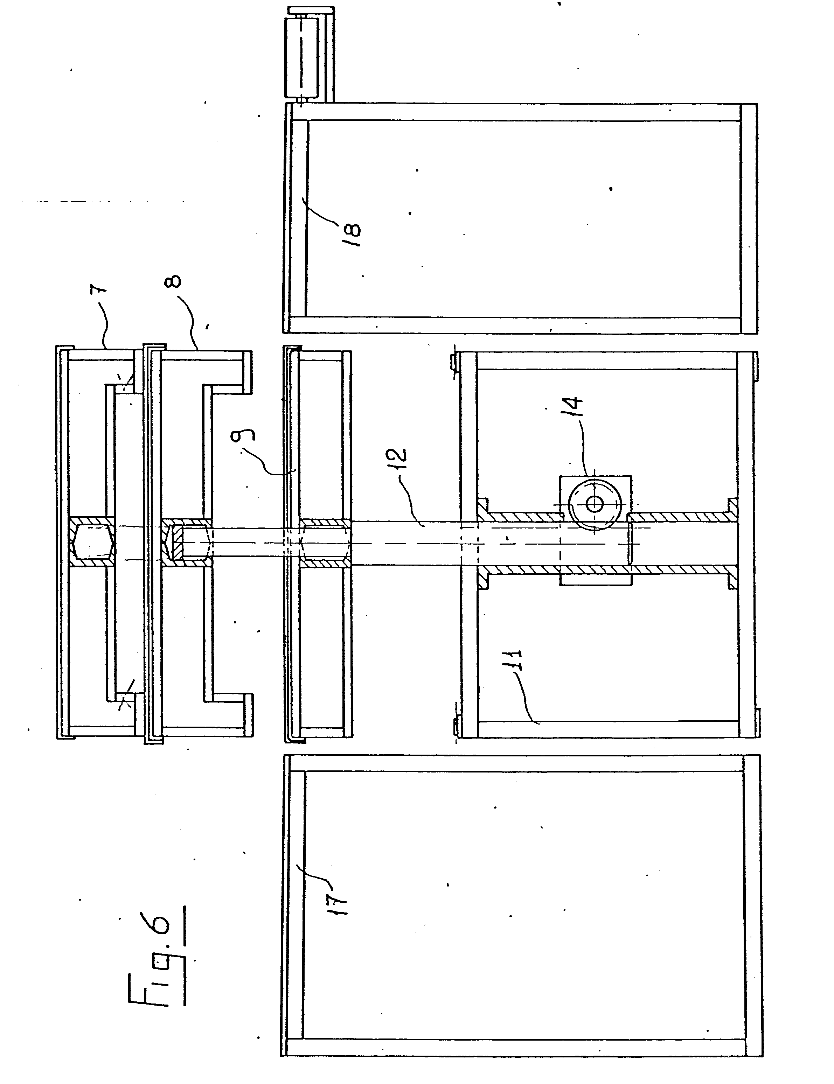

In Figures 5 and 6, the reference numeral 11 indicates the oven bed; 9 indicates the first floor of the oven, 8 indicates the second floor of the oven which closes on to 9 to form the lower heating chamber; 7 indicates the oven roof which closes on to the floor 8 to form the upper heating chamber; 10 indicates the steel column which raises the oven roof 7 under the control of the lifting device 13, in which position (see Figure 5 specifically) the upper oven chamber is at the level of the loading table 17 and unloading table 18; 12 indicates the steel column which raises the entire oven under the control of the lifting device 14, in which position (see Figure 6 specifically) the lower oven chamber is at the level of the loading table 17 and unloading table 18.

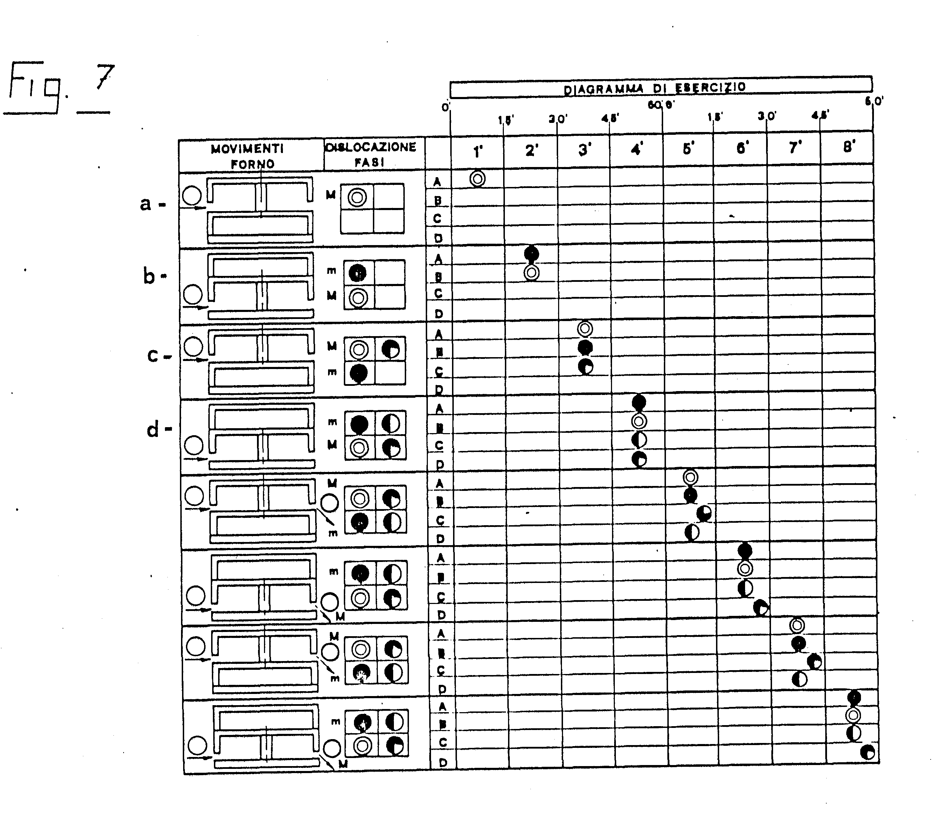

A description is given hereinafter of an operating cycle of the oven with reference to Figure 7, which represents the oven in diagrammatic cross-section. The tubes are loaded and unloaded sideways as indicated by the arrows. The electrical controls for the four sections into which the two oven floors are divided by the central lifting columns are independent. The letter M indicates the zones of maximum energy absorption, and m the zones of minimum absorption. The two concentric circles indicate preheating of the tubes, the black circle the vulcanisation stage, and the two partly black circles the cooling stages.

After setting the oven into operation, the stage sequence is as follows:

a) the roof 7 is raised by the column 10, and the tubes to be vulcanised are loaded from the table 17 on to the half
floor 8 of the oven, bounded by the column 10 (see Figure
5). These tubes are raised to vulcanisation temperature
with maximum energy absorption;

b) the entire oven is raised by means of the column 12, and a
further group of tubes to be vulcanised (see Figure 6) is
loaded from the loading table 17 on to the half floor 9
bounded by the column 10. During this stage, the tubes
loaded into the upper chamber are kept at vulcanisation
temperature with minimum energy absorption, whereas the
tubes loaded into the lower chamber are raised to
vulcanisation temperature;

c) the lower chamber is closed and the upper chamber opened.
The tubes loaded into the lower half chamber are vulcanised
by keeping them at the vulcanisation temperature using
minimum energy absorption. Simultaneously, the tubes
already vulcanised in the upper chamber are slid beyond
the columns into the cooling zone, and in their place a
new group of tubes is loaded, through which electric
current is then passed to raise them to vulcanisation
temperature, energy absorption is a maximum;

d) the entire oven is raised, the lower chamber opened and
the upper chamber closed. The tubes vulcanised in the
lower chamber are slid into the half oven adjacent to the
unloading table, where cooling begins, and in their place
a new group of tubes is loaded and raised to vulcanisation
temperature with maximum energy absorption. Simultaneously, the tubes in the upper half chamber are vulcanised
by keeping them at the maximum attained temperature with
minimum energy absorption. During this stage, the four
sections of the oven are loaded, and in the subsequent
stages the oven is always complete, because at each stage one section is loaded and another section unloaded in rotation, with continuous processing. In the two oven half chambers adjacent to the loading table there is alternate vulcanisation and tube heating to vulcanisation temperature, whereas in the two half chambers adjacent to the unloading chamber there is alternate cooling of the vulcanised tubes and unloading of the lower or upper chamber.

From the operating diagram of Figure 7, given by way of example, it can be seen that each stage lasts 15 minutes and the entire cycle 60 minutes.

As stated, during the preheating time period the tube temperature is raised to the vulcanisation temperature, whereas during the vulcanisation time period the temperature is maintained constant for the entire time necessary to carry out complete vulcanisation of the article.

The vulcanisation temperature varies between $140^{\circ}$ and $210^{\circ}$C, and the vulcanisation time varies according to the nature of the rubber, the shape and thickness of the article, and the required mechanical characteristics.

In the same manner, the voltage applied to the metal support elements or the metal elements incorporated in the articles through the gripping clamps varies within a wide range depending on the resistivity of the metal elements and the vulcanisation temperature to be attained.

In general, it can be stated simply by way of example that for vulcanising rubber tubes having an inner diameter of between 19 mm and 51 mm and a rubber thickness of up to 9 mm, an electrical apparatus is necessary with its output quantities adjustable up to the following maximum values:

$$I \text{ max} = 900 \text{ A}$$
$$V \text{ max} = 380 \text{ V}$$
$$\text{and thus } P \text{ max} = 342 \text{ kw}$$

Considering for example the vulcanisation of natural rubber tubes having a rubber thickness of 9 mm and an insulating wrapping, and with a variable internal diameter, it has been found that to attain a vulcanisation temperature of 200°C in 15 minutes, the current intensities per metal core (A) and the voltages per metre of core (V) indicated in Table 1 are necessary.

### TABLE 1

| Core diameter mm. | Mild steel A | V/m | 304 stainless steel A | V/m |
|---|---|---|---|---|
| 19 | 650 | 1.15 | 280 | 2.6 |
| 25 | 880 | 1.15 | 380 | 2.6 |
| 35 | - | - | 530 | 2.6 |
| 51 | - | - | 770 | 2.6 |

In the particular case considered, the metal cores were fed with direct current supplied by two identical power supply units served by a common transformer, each being used for one of the two floors of the oven.

Each power supply unit was able to supply the clamps of the oven floor to which it was connected, with a maximum current of 900 A and a maximum no-load voltage of 400 V (about 380 V when under load).

The transformer had a power of 150% of the maximum power absorbed by one unit, so as to allow the heating stage in one oven section to be carried out simultaneously with the temperature maintaining stage in the second section.

The following considerations can be made as a result of the tests carried out:

1) rubber tubes having an inner diameter of up to 25 mm can be vulcanised using mild steel cores. Using this method, up to 8 cores each 32 m long disposed in series can be used. For rubber thicknesses less than 9 mm, mild steel cores having a diameter greater than 25 mm can be used, particularly if the thermal efficiency of the oven is satisfactory;

2) stainless steel cores are necessary for tubes having an inner diameter exceeding 25 mm, it being possible to use 4 cores each 32 m long disposed in series. If the stainless steel cores are used for diameters less than 25 mm, the best arrangement is to have two parallel paths, each comprising 4 cores in series. With small rubber thicknesses, this arrangement can probably also be used for greater diameters. The maximum number of cores per oven section is also determined by the horizontal repulsion forces which are generated between the cores when current passes through them.

The embodiment represented in the accompanying figures is the preferred embodiment of the oven according to the present invention, allowing continuous processing.

It is however apparent that the new oven can be constructed in other ways, for example with a single insulated chamber fitted with gripping clamps of a shape suitable for the metal elements to be fixed and connected to the current supply units. Such an oven would provide batch processing of rubber articles either formed on metal cores or comprising metal conductor parts, of any shape and size.

In either case, whether they operate continuously or batchwise, the new ovens allow about four times greater productivity
than equivalent known vulcanisation means, such as autoclaves
for vulcanisation using pressurised steam.

To give an order of magnitude, by way of example it can be
stated that with the new ovens, in the case of tubes
productivity can be increased from about 3.5 $m/m^2$ to about
15 $m/m^2$ of plant layout area.    For other articles,
productivity can be increased from about 3.9 $kg/m^2$ to about
17 $kg/m^2$ of plant layout area.

Moreover, the new ovens allow production with absolutely
constant characteristics, and without rejects.

0095631

PATENT CLAIMS

1. An electrothermal vulcanisation oven for rubber articles
formed on metal parts or containing incorporated metal parts,
characterised by comprising at least one insulated chamber
tightly closed on two parallel sides, and open on the two
remaining parallel sides by a space sufficient to allow the
supported metal parts and/or the metal parts incorporated in
the rubber articles to emerge in positions corresponding
with gripping clamps arranged to fix the two ends of said
metal parts and to connect them to an electric current supply
apparatus.

2. An oven as claimed in claim 1, comprising two overlying
insulated chambers which can be opened vertically and
independently of each other.

3. An oven as claimed in claim 2, wherein the two chambers
are constituted by a base floor, an intermediate floor fitted
with side walls which close tightly on to the base floor, and
a roof fitted with side walls which close tightly on to the
intermediate floor.

4. An oven as claimed in claim 1, wherein the gripping
clamps comprise a fixed part disposed on suitable support
carriages provided at the front and rear ends of the oven, and
a mobile part which can close tightly on to the fixed part
around the metal parts emerging from the front and rear ends
of the oven.

5. An oven as claimed in claim 2, wherein the two insulated
chambers can be opened and raised independently by means of
retractable columns controlled by two separate lifting
devices.

6. An oven as claimed in claim 1, wherein the metal parts

- 2 -

0095631

are connected by way of the gripping clamps and flexible conductors to an apparatus arranged to supply electricity at a maximum voltage of 380 V, a maximum intensity of 900 A, and a maximum power of 342 kw.

7. An oven as claimed in claims 1 and 2, comprising hydraulic, mechanical or pneumatic members for controlling and synchronising the opening and closure of the gripping clamps.

8. An oven as claimed in claim 5, comprising hydraulic, mechanical or pneumatic members for controlling and synchronising the movements of the retractable lifting columns.

9. An oven as claimed in claim 1 which is operable batchwise.

10. An oven as claimed in claim 1 which is continuously operable.

Fig. 1

Fig. 2

16    6    16

2

1

15    15

5

0095631

Fig. 3

0095631

Fig.4

0095631

Fig. 5

Fig.6

0095631

Fig. 7

DIAGRAMMA DI ESERCIZIO

0095631

European Patent
Office

**EUROPEAN SEARCH REPORT**

0095631
Application Number

EP 83 10 4760

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-1 630 922  (H. BURLEY) | 1 | B 29 H    5/00 |
| | --- | | B 29 H    9/08 |
| Y | DE-A-2 601 297  (CONT. GUMMI) | 1 | |
| | --- | | |
| A | US-A-3 491 186  (R. RAINAR) | | |
| | ----- | | |

|  |
|---|
| TECHNICAL FIELDS SEARCHED (Int. Cl. 3) |
| B 29 H |

The present search report has been drawn up for all claims

| Place of search | Date of completion of the search | Examiner |
|---|---|---|
| THE HAGUE | 26-07-1983 | DECLERCK J.T. |